# EUROPÄISCHE PATENTSCHRIFT

(11) **EP 2 225 981 B1**
(45) Veröffentlichungstag und Bekanntmachung des Hinweises auf die Patenterteilung: **30.04.2014**
(21) Anmeldenummer: 10155055.6
(22) Anmeldetag: 01.03.2010
(51) Int. Cl.: A47J 43/07, B01F 7/00

(54) **Mischeinsatz für einen Rührtopf**
Mixing insert for a stirrer vessel
Insert de mixage pour un bol de mélange

(30) Priorität: 06.03.2009 DE 102009003576
(43) Veröffentlichungstag der Anmeldung: 08.09.2010
(60) Teilanmeldung: 12150019.3
(73) Patentinhaber: Vorwerk & Co. Interholding GmbH, 42275 Wuppertal (DE)
(72) Erfinder: Liß, Raphael, 53225 Bonn (DE); Mahmudov, Tursun, 140163 Samarkand City (UZ); Schomacher, Jutta, 42489 Wülfrath (DE); Castillo, Thalia Garcia, 27276 Torreón Coahuila (MX)
(74) Vertreter: Müller, Enno

(56) Entgegenhaltungen:
- EP-A1- 0 645 178
- EP-A1- 0 795 289
- EP-A1- 0 799 593
- EP-A1- 1 486 153
- AU-B2- 756 226
- DE-U1- 29 911 750
- FR-A- 1 159 265
- FR-A1- 2 850 856
- US-A- 4 312 596
- US-A1- 2007 221 068

## Beschreibung

Die Erfindung betrifft einen Mischeinsatz für einen Rührtopf nach den Merkmalen des Oberbegriffes des Anspruches 1.

Mischeinsätze der in Rede stehenden Art sind bekannt. Diese werden in dem Rührtopf an dem über das Küchengerät angetriebenen, rührtopfseitigen Rührwerk steckgehaltert, zur Drehmitnahme des Mischeinsatzes im Rührbetrieb. Hierbei kann ein gegebenenfalls vorgesehener Messersatz des Rührwerkes in dem Rührtopf verbleiben, welches sich entsprechend im Rührbetrieb zusammen mit dem Mischeinsatz dreht. Ein derartiger Mischeinsatz dient mit seinen radial und/oder axial sich erstreckenden Mischelementen insbesondere zur Erstellung homogener Schäume, wie beispielsweise Sahne, Eischnee oder Milchschaum, wobei weiter im Zusammenhang mit einer Erstellung von Milchschaum der Rührtopf bevorzugt zugleich während des Rührbetriebs beheizbar ist.

Ein Mischeinsatz der in Rede stehenden Art ist beispielweise aus der DE 296 04 547 U1 bekannt. Ein Küchengerät mit einem Rührtopf, welcher zur Aufnahme eines Mischeinsatzes geeignet ist, ist beispielsweise in der EP 0 757 531 B1 dargestellt und beschrieben.

Weiter ist zum Stand der Technik auf die EP 0 645178 A1 zu verweisen. Bei dem hieraus bekannten Rührtopf sind zusammensteckbare, jeweils einem gesonderten Antrieb zugeordneten Teile zur Herstellung einer Emulsion und zum Rühren vorgesehen. Zum Rühren sind zwei sich bezüglich einer Mittelachse gegenüberliegende, also bezogen auf einen Radius nur singulär ausgebildete, aufeinander zu gerichtete freikragende Stäbe vorgesehen.

Aus der US 4,312,596 ist ein Mischeinsatz mit einer gitter- bzw. siebartigen Struktur bekannt. Als Maschenweite ist konkret 0,21 cm² angegeben.

Aus der EP A10 799 593 ist ein Mischeinsatz bekannt, bei welchem horizontal und parallel verlaufende Tragarme vorgesehen sind, zwischen welchen sich im Wesentlichen vertikal in einem Horizontalquerschnitt langgestreckt ausgebildete Mischelemente erstrecken. Die relativ große in Drehrichtung projizierte Fläche der Mischelemente kann insbesondere bei Massen mit höherer Viskosität die gewünschten Ergebnisse nicht erreichen lassen.

Ausgehend von dem vorbeschriebenen Stand der Technik beschäftigt sich die Erfindung mit der Aufgabe, einen günstigen Mischeinsatz für einen Rührtopf anzugeben, mit dem insbesondere eine vorteilhaft homogene Schaumbildung erreicht werden können soll.

Diese Aufgabe ist beim Gegenstand des Anspruches 1 gelöst, wobei darauf abgestellt ist, dass sich von einem in Radialrichtung verlaufenden Schaufelelement jeweils nach vertikal oben die drahtförmigen Mischelemente erstrecken, wobei die Mischelemente in Tragarmen wurzeln und zwischen den fußseitigen Tragarmen und den im Wesentlichen in einem spitzen Winkel zu einer Horizontalebene verlaufende Halterungsarmen gespannt sind.

Der Mischeinsatz weist insbesondere verbesserte Eigenschaften zum Schlagen von Sahne oder Eiweiß auf. Dieser Mischeinsatz bringt spezielle für Sahne oder Eiweiß sehr gute Ergebnisse weist darüber hinaus aber auch zum Aufschäumen von Milch günstige Eigenschaften auf. Das fußseitig vorgesehene Schaufelement erstreckt sich in Zuordnungsstellung des Mischeinsatzes in dem Rührtopf mit geringem vertikalen Abstand zum Rührtopfboden, so insbesondere mit einem Abstand von wenigen Zehntel Millimetern, weiter von 0,1 mm bis 2 mm, und bewirkt zufolge seiner Ausgestaltung und Anordnung ein günstiges Aufschlagen von Sahne und Eiweiß. Das Schaufelelement erstreckt sich hierbei weiter bevorzugt in Radialrichtung über die gesamte freie Topfinnenradiale bis hin zur Innenseite der Topfwandung. Die radial sich erstreckenden Mischelemente des Mischeinsatzes sind drahtförmig gestaltet, wobei benachbarte Mischelemente freie Zwischenräume belassen. Diese Mischelemente unterstützen das Schlagen der Sahne oder des Eiweißes, dienen darüber hinaus auch zur Erzeugung von Milchschaum. Zudem wird im Falle eines Schlagens von Sahne oder Eiweiß das Medium in der Bahn gehalten, so dass diese nicht nach radial außen gegen die Topfinnenwand oder nach vertikal oben gegen einen gegebenenfalls vorgesehenen Rührtopfdeckel gespritzt wird. Das Medium wird hierbei gleichermaßen verrührt, vermengt und aufgeschäumt, wobei weiter im Falle der Erzeugung von Milchschaum bei entsprechender Wärmezufuhr bevorzugt über den Rührtopfboden einem Anbrennen des Mediums entgegengewirkt ist. Das radial verlaufende Schaufelelement weist in bevorzugter Ausgestaltung eine vertikale Höhe von 6mm bis 12mm, weiter bevorzugt von etwa 10mm auf, woraus weiter zufolge des vorbeschriebenen Verhältnisses eine vertikale Höhe bzw. freie Länge eines stabförmigen Mischelements von etwa 20mm bis 120mm resultiert.

Die sich in einem spitzen Winkel zur Horizontalen erstreckende Halterungsarme ermöglichen nach radial außen eine größere vertikale Länge der Mischelemente.

Das radial verlaufende, fußseitig an den stabförmigen Mischelementen angeordnete Schaufelelement kann eine änderbar wirksame Beaufschlagungsfläche aufweisen. Die Klappachse des Schaufelelements erstreckt sich hierbei bevorzugt in radialer Richtung, wobei weiter die stabförmigen Mischelemente sich über die Klappachsenebene des Schaufelelements hinaus nach unten in Richtung auf den Rührtopfboden erstrecken, weiter somit auch einen Anschlag für das Schaufelelement in der Nutzungsstellung zum Schlagen von Sahne und Eiweiß bietend.

Die drahtartigen Mischelemente weisen in bevorzugter Ausgestaltung eine freie Länge von etwa 50mm auf. Die Länge der Mischelemente ist so gewählt, dass die ggf. freien Enden aus der zu schlagenden oder zu schäumenden Flüssigkeit herausragen. Die beim Schäumen von Milch insbesondere wirksamen Mischelemente spalten die Milch bzw. das aufzuschäumende Medium auf und fügen diesem Luft zu. In bevorzugter Ausgestaltung sind die Mischelemente einstückig materialeinheitlich mit dem Schaufelelement insbesondere bei einer nicht verschwenkbaren Ausgestaltung des Schaufelelements ausgebildet, weiter bevorzugt als Kunststoffteil hergestellt im Kunststoffspritzverfahren. In weiterer Ausgestaltung können die drahtförmigen Mischelemente auch kunststoffummantelt sein.

Die Mischelemente verlaufen in einer Ausgestaltung parallel zueinander unter Belassung eines Abstandes zwischen zwei nebeneinander angeordneten Mischelementen. Der Abstand zwischen den Mischelementen ist bevorzugt gleich gestaltet oder mit in radialer Richtung größer werdendem Abstand ausgebildet, wobei der gewählte Abstand in Abhängigkeit zu der Stabstärke der einheitlich gestalteten Mischelemente gewählt ist. So beträgt der Abstand der parallel verlaufenden Mischelemente zueinander bei einer Stabstärke von beispielsweise 1,5mm etwa 10mm. Bei Verwendung von durchmessergrößeren Mischelementen ist der Abstand größer gewählt. So ist ein Abstand bevorzugt, der etwa dem Vier- bis Zehn-Fachen des Stabdurchmessers entspricht. Das radial äußere stabförmige Mischelement ist mit radialem Abstand zur inneren Rührtopfwandung positioniert, wobei der Abstand etwa dem Abstand zweier benachbarter Mischelemente zueinander entspricht, so beispielsweise 10mm bis 12mm.

Der Mischeinsatz ist in bevorzugter Ausgestaltung mit zwei achsensymmetrisch gegenüberliegenden Mischeinsatz-Abschnitten versehen, die gleich gestaltet sind. Entsprechend weist der Mischeinsatz zwei in Radialrichtung verlaufende Schaufelelemente auf, von denen sich nach vertikal oben jeweils Mischelemente erstrecken. In diesem Zusammenhang erweist es sich von Vorteil, wenn bezüglich einer Rotationsachse gegenüberliegende Mischelemente nach oben divergieren derart, dass der Abstand zwischen diesen Mischelementen im Bereich der Schaufelelemente kleiner ist als im freien Endbereich der Mischelemente. So verlaufen die Mischelemente in einem spitzen Winkel zu einer Achsparallelen, weiter beispielsweise unter Einschluss eines Winkels von 1° bis 15°.

In einer weiteren Ausgestaltung verlaufen die Mischelemente bezogen auf eine Mischelemente-Vertikalachse wellenförmig. Die Wellen schneiden hierbei im Zuge der Vertikalerstreckung des Mischelementes mehrfach die Mischelemente-Vertikalachse, dies bevorzugt unter zweidimensionaler Wellenausrichtung, alternativ aber auch in dreidimensionalem Wellenverlauf. So ist in einer alternativen Ausgestaltung das Mischelement federgangartig geformt.

Eine weitere günstige Ausführungsform des Mischeinsatzes sieht eine bügelartige Ausbildung des Mischelementes vor, mit einer Bügelebene, die im Querschnitt in einem Winkel zu einer Schaufelelementebene steht. So erstreckt sich das bügelartige Mischelement beispielsweise bei horizontaler Ausrichtung des Schaufelelementes vertikal oder in einem spitzen Winkel zur Vertikalen bis hin zu einem spitzen Winkel zur Schaufelelementebene. Zufolge dieser Ausgestaltung erstreckt sich das bügelartige Mischelement in einer Horizontalprojektion auf die Schaufelelementebene zumindest mit Bezug auf eine Drehrichtung der Mischeinsatzes bei Festlegung des Mischelementes in Überdeckung zu der Schaufelelementebene über das Schaufelelement hinaus, eilt entsprechend dem Schaufelelement in einer Drehrichtung des Mischeinsatzes vor bzw. in der entgegengerichteten Drehrichtung diesem nach. Hierdurch wird ein verbessertes Schlag- bzw. Schaumergebnis erreicht. Der Bügel ist weiter bevorzugt umlaufend geschlossen, so dass das Mischelement zwei in der jeweiligen Drehrichtung über das Schaufelelement hinausragende Bügelabschnitte aufweist, die in weiter bevorzugter Ausgestaltung in einer gemeinsam aufgespannten Ebene verlaufen.

Die in Drehrichtung vorderen Bügelabschnitte sind in einer Ausführungsform unterschiedlich gestaltet zu den in Drehrichtung hinteren Bügelabschnitten, so dass in Abhängigkeit von der Drehrichtung unterschiedliche Bügelabschnitte zunächst zur Wirkung kommen. Die unterschiedlichen Bügelabschnitte sind ausgelegt auf das jeweils zu erzielende Ergebnis. So dient ein Bügelabschnitt des umlaufend geschlossenen Bügels zur Unterstützung beim Schlagen von Sahne oder Eiweiß durch das Schaufelelement, während der in Drehrichtung gegenüberliegende Bügelabschnitt bei entgegengerichteter Drehrichtung genutzt wird zum Aufschäumen von Milch oder dergleichen. So ist ein Bügelabschnitt stabförmig gebildet, während der andere Bügelabschnitt wellenförmig, weiter beispielsweise federgangartig geformt ist. Auch hierbei ist eine drehrichtungsabhängige Wirkungsweise des Mischeinsatzes gegeben, wobei beim Schlagen von Sahne oder Eiweiß in Drehrichtung betrachtet zunächst der stabförmige Bügelabschnitt wirkt und hiernach der wellenförmige Bügelabschnitt folgt. Der stabförmige Bügelabschnitt schlägt hierbei das Medium, während der wellenförmige, beispielsweise federartige Bügelabschnitt nicht nennenswert dazu beiträgt. Beim Aufschäumen von Milch oder dergleichen hingegen bewirkt der nach Drehrichtungsänderung nunmehr voreilende, wellenförmige Bügelabschnitt ein Durchmischen des Mediums mit Luft zum Aufschäumen desselben.

Weiter vorteilhaft erweist sich eine Ausgestaltung, bei welcher ein radial äußeres, vertikal verlaufendes Mischelement betrachtet von radial innen konkav gekrümmt verläuft. Dieses Mischelement, welches wie beschrieben stabartig oder auch bügelartig ausgestaltet sein kann, schlägt in einer Drehrichtung bevorzugt die durch die Zirkulation im Rührtopf wandungsinnenseitig des Topfes anhaftende Sahne oder Eiweiß wieder in den schlagenden Kreislauf zurück. Auch die durch die zentrale Anordnung an die Rührwand gedrängte Milch im Aufschäumbetrieb wird über das radial äußere Mischelement aufgeschäumt.

Einem Schaufelelement kann auch ein sich horizontal erstreckendes Mischelement zugeordnet sein. Letzteres verläuft in bevorzugter Ausgestaltung mit geringem vertikalen Abstand zum Topfboden, womit ein günstiges Aufschlagen von Sahne oder Eiweiß erreicht ist, darüber hinaus beim Aufschäumen von Milch einem Anbrennen derselben bei temperiertem Rührtopfboden verhindert ist. Weiter erstreckt sich das dem Schaufelelement zugeordnete Mischelement in einer Horizontalebene bis zur Topfwandung, dies unter Belassung eines geringen Spaltes. Die rotierenden, horizontal sich erstreckenden Mischelemente wirken zufolge der vorbeschriebenen Anordnung und Ausrichtung insbesondere in den Bereichen, in denen sich die Sahne bzw. das Eiweiß oder die Milch durch die Rotationskräfte ansammelt. Das geschlagene oder geschäumte Medium breitet sich dabei nach vertikal oben aus, womit durch die sich horizontal erstreckenden Mischelemente und die Schaufelelemente nur die noch nicht geschlagene oder geschäumte Flüssigkeit bearbeitet wird.

Das horizontal ausgerichtete Mischelement mit Bezug auf die Drehachse des Mischeinsatzes radial erstrecken. Entsprechend kämmt das Mischelement bei drehendem Mischeinsatz das aufzuschäumende oder zu schlagende Medium quer zu seiner Längserstreckung. Günstige Schaum- oder auch Schlagergebnisse werden zudem erzielt, wenn das Mischelement quer zu einer sich auf die Drehachse beziehenden Radialen ausgerichtet ist, so dass das Mischelement bei Rührwerksdrehung in dessen Längserstreckung windet. In alternativer oder auch kombinativer Ausgestaltung erstreckt sich das Mischelement zumindest kreisabschnittförmig, dies weiter bevorzugt in konzentrischer Ausrichtung zur Mischeinsatz-Drehachse. Ein derartig kreisabschnittförmiges Mischelement ist beispielsweise im Bereich der freien Enden von radial sich erstreckenden Mischelementen festgelegt, womit eine günstige Kombination von insgesamt sich horizontal erstreckenden Mischelementen zum Aufschlagen bzw. Aufschäumen erreicht ist. Das Mischelement erstreckt sich hierbei beispielsweise in einem Vollkreis, alternativ in einem Halbkreis. Darüber hinaus können auch beispielsweise zwei kreisabschnittförmige Mischelemente vorgesehen sein, die in einem Grundriss des Mischeinsatzes betrachtet zwei Viertelkreise bilden, die diametral gegenüberliegend mit Bezug auf die Drehachse angeordnet sind.

Ein günstige Kombination zum Schlagen von Sahne oder Eiweiß und zum Aufschäumen von Milch ist in einer Ausführungsform dadurch erreicht, dass das Mischelement einseitig und zumindest in teilweiser Überdeckung zu dem Schaufelelement angeordnet ist. So ist auch hier eine drehrichtungsabhängige Wirkung der Mischelemente und der Schaufelelemente erreicht, wobei die Mischelemente weiter bevorzugt dem Aufschäumen von Milch und die Schaufelelemente dem Schlagen von Sahne oder dergleichen dienen. In diesem Zusammenhang erweist sich eine Ausgestaltung von Vorteil, bei welcher die Mischelemente schraubengangförmig gebildet sind, womit in günstiger Weise zum Aufschäumen von Milch Luft in das Medium eingebracht wird.

Ein schraubengangförmiges Mischelement weist bevorzugt eine Federform auf, so weitere eine zylindrische oder konische Federform, weiter gegebenenfalls mit sich veränderlichem Durchmesser mit Bezug auf die Längserstreckung des Mischelements. Alternativ zu einer Feder kann auch ein Gitter, gefügt zu einer zylindrischen Form Verwendung finden. Auch hierbei wird, wie bei einer schraubengangförmigen Ausgestaltung des Mischelementes die Milch durch das Gitter gedrückt und aufgeschäumt.

Es kann auch vorgesehen sein, dass der Mischeinsatz axial gegenüberliegend zwei Aufsteckbereiche aufweist. Diese sind symmetrisch angeordnet, zur wahlweisen Steckhalterung auf dem rührtopfseitigen Messersatz bzw. auf das Rührwerk. So sind je nach Steckzuordnung für die jeweilige Bearbeitung (Aufschäumen oder Schlagen) entsprechend ausgeformte Aufsteckbereiche dem zu bearbeitenden Medium zuordbar, womit eine günstige Lösung sowohl zum Schlagen von Sahne/Eiweiß und zum Schäumen bspw. von Milch erreicht ist, dies weiter bevorzugt in Form eines einteiligen Mischeinsatzes.

Zufolge der zwei Aufsteckbereiche können rührtopfbodenseitig je nach Steckrichtung unterschiedliche Mischelemente angeordnet sein, zur angepassten Zuordnung von Mischelementen zu der durchzuführenden Medienbearbeitung. So sind dem Topfboden beispielsweise zum Schlagen von Sahne oder Eiweiß entsprechende Mischelemente zugeordnet, so beispielsweise stabförmige Mischelemente, welche fußseitig in radial verlaufende Schaufelelemente übergehen. Zum Aufschäumen von Milch oder dergleichen werden insbesondere durch Umstecken des Mischeinsatzes entsprechend ausgelegte Mischelemente dem Rührtopfboden zugeordnet, so weiter beispielsweise schraubengang- bzw. federgangartige Mischelemente. Zufolge der symmetrischen Ausgestaltung der Aufsteckbereiche und den den Aufsteckbereichen zugeordneten, speziell auf den Bearbeitungsvorgang ausgelegten Mischelementen ist jeweils mittels nur eines Mischeinsatzes ein auf die Bearbeitung des Mediums abgestimmter Mischelemente-Satz in die aktive Stellung bringbar.

Der Mischeinsatz weist in bevorzugter Ausgestaltung in übereinander liegenden Bereichen unterschiedlich orientierte Mischelemente auf. Diese Mischelemente können gleich gestaltet sein, sind jedoch bevorzugt unterschiedlich ausgeformt und sind radial und/oder axial mit Bezug auf die Mischeinsatzachse angeordnet, weiter unter Einschluss eines spitzen oder stumpfen Winkels zu einer Horizontal- oder Vertikalebene, darüber hinaus gegebenenfalls ausgerichtet in Umfangsrichtung. So kann ein Mischeinsatz beispielsweise radial und axial ausgerichtete Mischelemente aufweisen, weiter beispielsweise axial und in Umfangsrichtung oder auch radial und in Umfangsrichtung ausgerichtete Mischelemente.

Die jeweils angegebenen zahlenmäßigen Bandbreiten schließen auch - soweit solche nicht ohnehin exemplarisch angegeben sind - sämtliche Zwischenwerte ein und zwar insbesondere in Ein-Zehntel-Schritten von der unteren und/oder oberen Grenze auf die jeweils andere Grenze hin eingeschränkt. "Und" steht hierbei dafür, dass beide Grenzen um jeweils ein oder mehrere Zehntel auf die Grenze hin verschoben, das heißt eingegrenzt werden.

Nachstehend ist die Erfindung anhand der beigefügten Zeichnung, welche lediglich Ausführungsbeispiele darstellt, näher erläutert.

Es zeigt:
- Fig.1: ein Küchengerät in partiell aufgeschnittener Seitenansicht mit einem in dem Rührtopf angeordneten Mischeinsatz in einer ersten Ausführungsform;
- Fig. 2: den Querschnitt durch den Rührtopf mit Blick auf den an einem Messersatz des Rührtopfes steckgehalterten Mischeinsatz;
- Fig. 3: die Herausvergrößerung des geschnitten dargestellten Rührtopfbodenbereiches bei Drehantrieb des Mischeinsatzes in einer Drehrichtung;
- Fig. 4: eine der Fig. 3 entsprechende Darstellung, jedoch bei entgegengesetzter Drehrichtung;
- Fig. 5: den Schnitt gemäß der Linie V - V in Fig. 3;
- Fig. 6: eine Darstellung gemäß Fig. 5, jedoch den Schnitt gemäß der Linie VI - VI in Fig. 4 betreffend;
- Fig. 7: eine weitere der Fig. 3 entsprechende Darstellung, jedoch eine zweite Ausführungsform des Mischeinsatzes betreffend;
- Fig. 8: den Mischeinsatz in einer dritten Ausführungsform in einer Darstellung gemäß Fig. 3;
- Fig. 9: den Schnitt gemäß der Linie IX - IX in Fig. 8;
- Fig. 10: eine weitere der Fig. 3 entsprechende Darstellung, mit einem Mischeinsatz in einer vierten Ausführungsform;
- Fig. 11: den Schnitt gemäß der Linie XI - XI in Fig. 10;
- Fig. 12: in einer fünften Ausführungsform den Mischeinsatz in einer Darstellung gemäß Fig. 3;
- Fig. 13: den Schnitt gemäß der Linie XIII - XIII in Fig. 12;
- Fig. 14: den Mischeinsatz in einer sechsten Ausführungsform in einer Darstellung gemäß Fig. 3;
- Fig. 15: den Schnitt gemäß der Linie XV - XV in Fig.14;

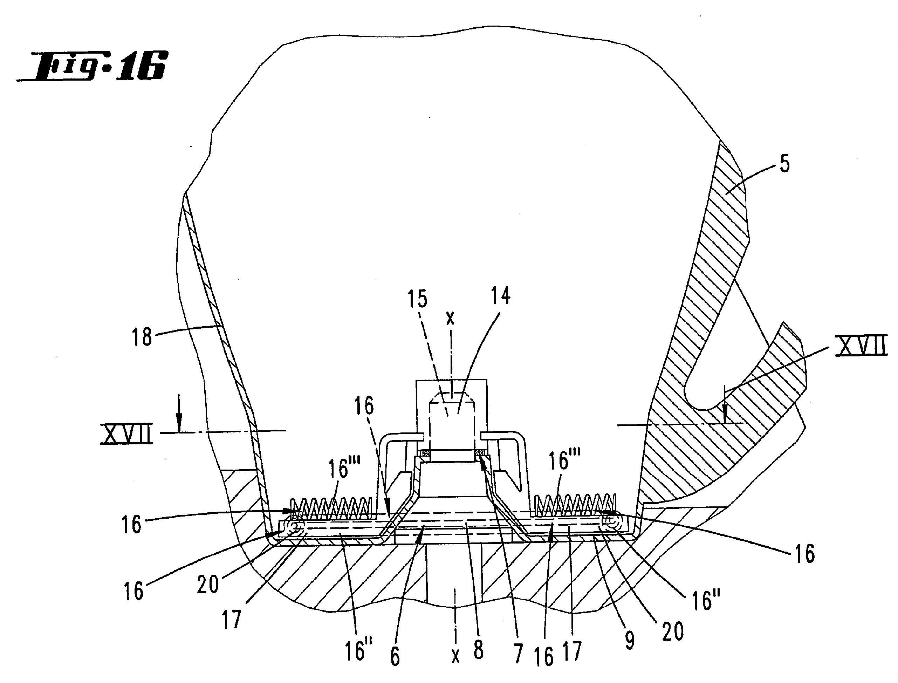

- Fig. 16: den Mischeinsatz gemäß Fig. 3, jedoch eine siebte Ausführungsform betreffend, im Hinblick auf die Ausführungsform der Fig. 19-21;

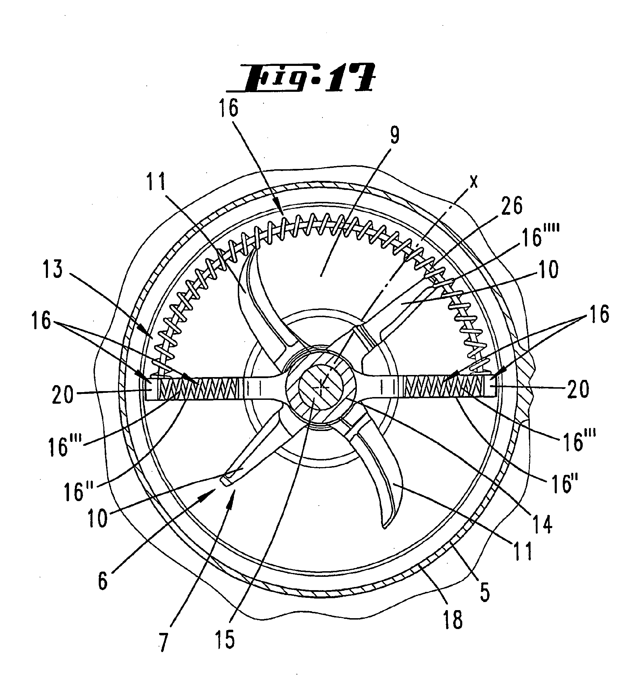

- Fig. 17: den Horizontalschnitt gemäß der Linie XVII - XVII in Fig.16;
- Fig. 18: eine achte Ausführungsform des Mischeinsatzes in einer Darstellung gemäß Fig. 3;
- Fig. 19: in einer Darstellung gemäß Fig. 3 ein Mischeinsatz in einer elften Ausführungsform, betreffend einen kombinierten Mischeinsatz in einer ersten Steckzuordnungsstellung zum rührtopfseitigen Messersatz;
- Fig. 20: den Schnitt gemäß der Linie XX - XX in Fig. 19;
- Fig. 21: eine der Fig. 19 entsprechende Darstellung, jedoch eine zweite Steckzuordnungsstellung des Mischeinsatzes betreffend.

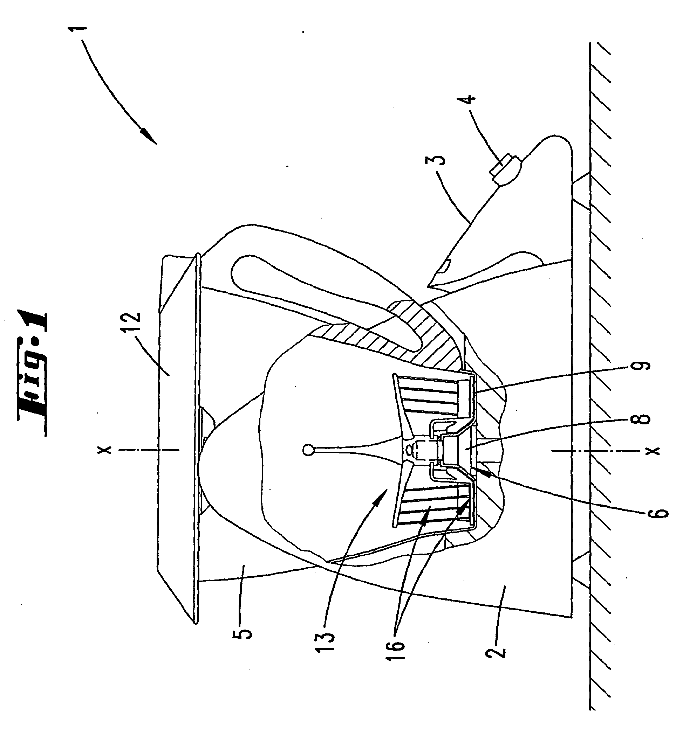

Dargestellt und beschrieben ist zunächst mit Bezug zu Fig.1 ein Küchengerät 1 mit einem Gehäuse 2, welch letzteres ein Bedienfeld 3 aufweist. Dieses Bedienfeld 3 trägt einen Drehzahlsteller 4, weiter bevorzugt einen nicht dargestellten Temperaturwähler.

Des weiteren weist das Gehäuse 2 einen Aufnahmebereich für einen abnehmbaren und bevorzugt beheizbaren Rührtopf 5 auf. Letzterer ist mit einem Rührwerk 6 versehen, welches über eine nicht näher dargestellte Kupplung und einer rührwerkseitigen Antriebswelle 8 bei in dem Aufnahmebereich eingesetztem Rührtopf 5 mit einem, über den Drehzahlsteller 4 regelbaren Elektromotor in Verbindung steht.

Der Topfboden 9 des Rührtopfes 5 ist flach und im wesentlichen eben ausgebildet, wobei weiter in diesen Topfboden bevorzugt ein über den Temperaturwähler regelbares Widerstands-Heizelement beispielsweise in Form einer Dickschichtheizung integriert ist.

Die senkrecht zum Topfboden 9 ausgerichtete Rührwerkachse x durchsetzt den Topfboden 9 mittig. Eine Festelegung des Rührwerkes 6 an dem Topfboden 9 erfolgt mittels Verspannung.

Das Rührwerk 6 ist als Messersatz 7 ausgebildet, mit einem ersten unteren Messer 10 und einem zweiten oberen Messer 11.

Insbesondere im betriebsbereiten Zustand gemäß Figur 1 ist der Rührtopf 5 mittels eines Deckels 12 verschlossen. Dieser weist eine, die Rührwerkachse x mittig aufnehmende, nicht dargestellte Einfüllöffnung auf.

Das Rührwerk 6 bzw. der Messersatz 7 dient zur Zerkleinerung und/ oder Vermengung von in dem Rührtopf 5 befindlichem Rührgut.

Um das Rührwerk 6 bzw. den Rührtopf 5 weiter auch zum Schlagen von Sahne oder Eiweiß, weiter auch zum Aufschäumen von Milch nutzen zu können, ist dem Rührwerk 6 bzw. dem Messersatz 7 ein Mischeinsatz 13 zuordbar.

Die nachfolgend beschriebenen Ausführungsbeispiele eines Mischeinsatzes 13 sind grundsätzlich zur drehfesten Steckanordnung an dem Messersatz 7 ausgelegt. Hierzu weist der jeweilige Mischeinsatz 13 zunächst einen zentralen Steckhalterungsabschnitt 14 auf. Dieser ist im wesentlichen als Aufsteckhülse gebildet, mit zum drehfesten Steckaufsetzen auf einem über die Festlegungsebene des Messersatzes 7 hinausragenden Antriebswellenabschnitt 15. Dieser ist bevorzugt, wie auch entsprechend die Aufnahme des Steckhalterungsabschnittes 14, im Querschnitt unrund gestaltet, zur drehfesten Anordnung des Mischeinsatzes 13 auf dem Antriebswellenabschnitt 15. Weiter ist die Steckzuordnung lageorientiert derart, dass die Mischelemente 16 des Mischeinsatzes 13 in einer Projektion betrachtet auf den Rührtopfboden 9 in dem Bereich zwischen zwei in Umfangsrichtung benachbarten Messern 10, 11 angeordnet sind.

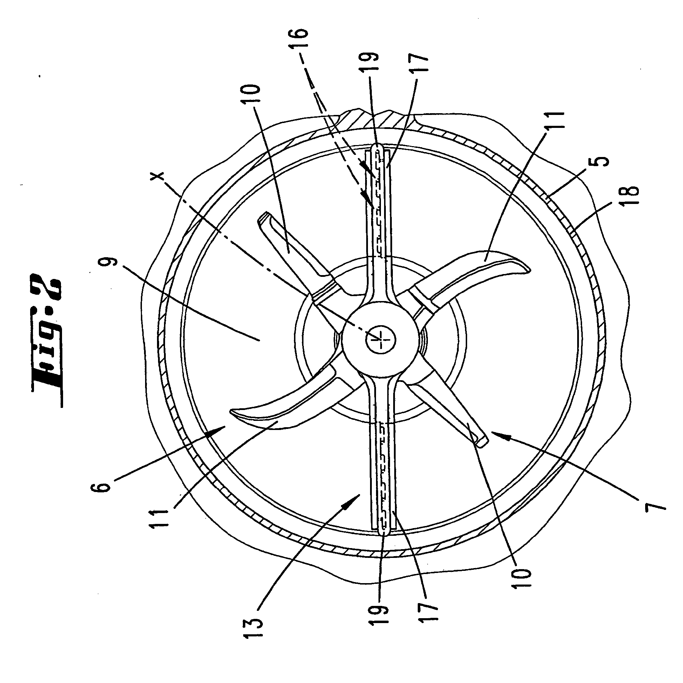

Das in den Figuren 1 bis 6 dargestellte erste Ausführungsbeispiel eines Mischeinsatzes 13 ist ausgelegt sowohl zum Schlagen von Sahne und/oder Eiweiß als auch zum Aufschäumen von Milch, wobei beim Aufschäumen von Milch bevorzugt zugleich über die in dem Topfboden 9 integrierte Heizung die Milch aufgewärmt wird.

Der Mischeinsatz 13 der ersten Ausführungsform ist mit unterschiedlich gestalteten und ausgerichteten Mischelementen 16 versehen.

An dem Steckhalterungsabschnitt 14 sind in diametraler Gegenüberlage zunächst Tragarme 17 angeformt, die mit geringem Abstand zum Antriebswellenabschnitt 15 nach radial außen geführt sind und mit geringem Abstand zum Topfboden 9 verlaufen. Die dem Topfboden 9 zugeordneten freien Abschnitte der Tragarme 17 erstrecken sich in einer zum Topfboden 9 verlaufenden Parallelebene, wobei der vertikale Abstand zum Topfboden 9 etwa angepasst ist an die in vertikaler Richtung betrachtete Materialstärke der Tragarme 17, so in dem dargestellten Ausführungsbeispiel etwa 2mm bis 4mm. Weiter erstrecken sich die Tragarme 17 in Radialrichtung unter Belassung eines radialen Abstandes zur Rührtopfwandung 18, welcher radiale Abstand etwa dem Zwei-Fachen des vertikalen Abstandes zwischen Tragarmen 17 und Topfboden 9 entspricht.

In den Tragarmen 17 wurzeln jeweils stabförmige Mischelemente 16', so weiter in dem dargestellten Ausführungsbeispiel je Tragarm 17 vier derartiger Mischelemente 16'. Letztere verlaufen parallel zueinander ausgerichtet, unter Belassung von gleichen, in radialer Richtung betrachteten Abständen.

Die stabförmigen Mischelemente 16' sind unter Einschluss eines spitzen Winkels von etwa 10° zu einer Achsparallelen ausgerichtet, hierbei weiter gegenüber einer Achsparallelen geneigt in Richtung auf die Rührtopfwandung 18, woraus sich zufolge der diametral gegenüberliegenden Anordnung von Mischelementen 16' ein divergierender Verlauf der Mischelemente 16' mit Bezug auf die Rotationsachse ergibt.

Die den Tragarmen 17 gegenüberliegenden Enden der Mischelemente 16' sind festgelegt in radial von dem Steckhalterungsabschnitt 14 des Mischeinsatzes 13 auskragenden Halterungsarmen 19, die im wesentlichen in einem spitzen Winkel zu einer Horizontalebene verlaufen, dies ausgehend vom Steckhalterungsabschnitt 14 nach radial außen ansteigend unter Belassung eines radialen Abstandes zwischen den freien Enden der Halterungsarme 19 und der Rührtopfwandung 18.

Die Mischelemente 16' sind zufolge dieser Anordnung zwischen den Halterungsarmen 19 und den fußseitigen Tragarmen 17 gespannt, formen entsprechend ein bei Rotation des Mischeinsatzes 13 das zu bearbeitende Fluid durchziehendes Gatter.

Die freie Erstreckungslänge der stabförmigen Mischelemente 16' zwischen den Tragarmen 17 und den Halterungsarmen 19 entspricht etwa dem Radiusmaß eines Tragarmes 17, ausgehend von der Rührwerksachse x bis hin zum freien Ende des Tragarmes 17. Weiter ist die freie Länge der Mischelemente 16' so gewählt, dass sich die deren freien Enden aufnehmenden Halterungsarme 19 oberhalb des zu bearbeitenden Fluids erstrecken.

Bei entsprechend stabiler Auslegung der stabförmigen Mischelemente 16' können die Halterungsarme 19 auch entfallen.

Das radial äußerste, stabförmige Mischelement 16' ist mit einem radialen Abstand von 10mm bis 12mm zur Rührtopfwandung 18 positioniert. Die hiervon ausgehend nach radial innen sich anschließenden Mischelemente 16' sind mit einem gleichmäßigen Abstand von etwa 10mm zueinander angeordnet.

Fußseitig der stabförmigen Mischelemente 16', entsprechend weiter oberseitig der Tragarme 17 zugeordnet sind radial verlaufende Mischelemente 16" in Art von Schaufelelementen 20 vorgesehen. Diese erstrecken sich ausgehend vom Steckhalterungsabschnitt 14 des Mischeinsatzes 13 in radialer Richtung nahezu über die gesamte Länge des jeweils zugeordneten Tragarmes 17, weiter mit einer vertikalen Höhe, die etwa einem Viertel der freien Länge eines stabförmigen Mischelementes 16' entspricht. Mit Bezug auf eine erste Drehrichtung a sind diese Schaufelelemente 20 vor den stabförmigen Mischelementen 16' positioniert, weiter an diese angebunden, wobei die Anbindung in Form eines Scharniers 21 mit jeweils sich radial und horizontal erstreckender Achse y gebildet ist. So ist weiter jedes Schaufelelement 20 bei insgesamt bevorzugt im Kunststoffspritzverfahren hergestelltem Mischeinsatz 13 beispielsweise über ein Filmscharnier im fußseitigen Bereich der Mischelemente 16' an diesen angebunden.

Zufolge der Scharnieranbindung sind die Schaufelelemente 20 aus einer ersten Stellung in eine zweite Stellung und zurück klappbeweglich, so weiter insbesondere aus einer Vertikalstellung in eine Horizontalstellung bzw. aus einer Horizontalstellung in eine Vertikalstellung.

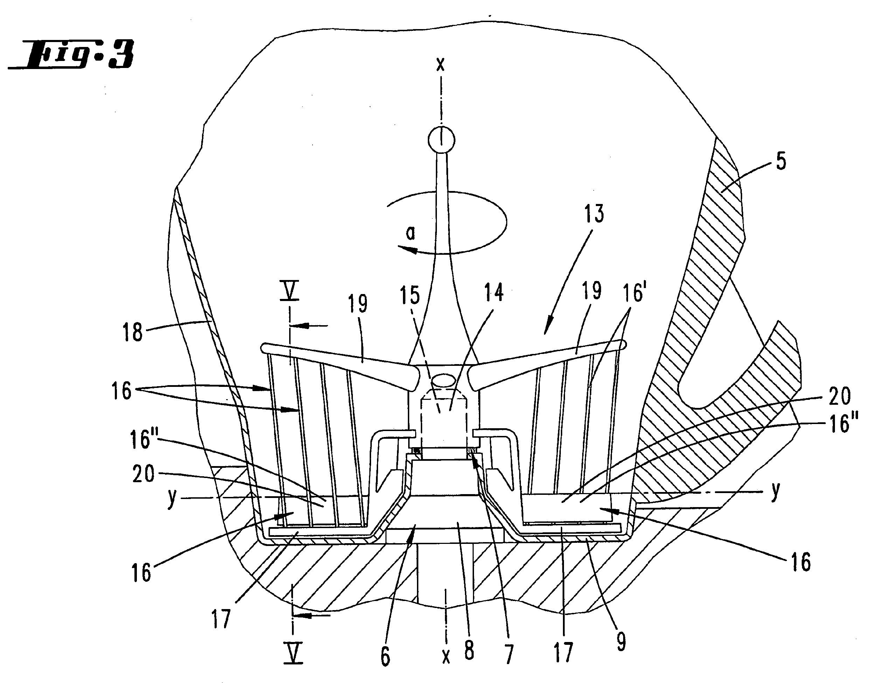

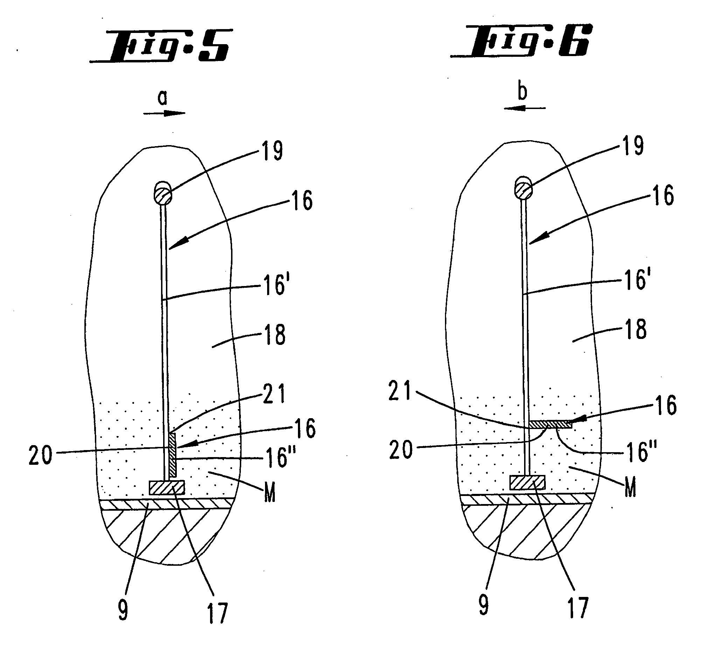

Durch die gegebene Klappbeweglichkeit der Schaufelelemente 20 werden je nach Klappstellung der Schaufelelemente 20 unterschiedliche Beaufschlagungsflächen für das zu bearbeitende Fluid angeboten. So stellt sich in der vertikal ausgerichteten Stellung eines jeden Schaufelelements 20 gemäß der Darstellung in den Figuren 3 und 5 eine große Beaufschlagungsfläche ein, die definiert ist durch das Radialerstreckungsmaß und die vertikale Höhe des Schaufelelements 20. In der horizontalen Klappstellung hingegen ist die Beaufschlagungsfläche gegenüber der Vertikalstellung wesentlich verkleinert, ist hier definiert durch die radiale Länge des Schaufelelementes 20 und deren Materialstärke, die in dem dargestellten Ausführungsbeispiel etwa der Materialstärke eines Tragarmes 17 entspricht.

Durch die mögliche Änderung der Beaufschlagungsflächen der Schaufelelemente 20 bzw. der durch diese geformten Mischelemente 16" ist der beschriebene Mischeinsatz 13 geeignet sowohl zum Schlagen von Sahne bzw. Eiweiß als auch zum Aufschäumen von Milch.

In der vertikal ausgerichteten Klappstellung der Schaufelelemente 20 dient der Mischeinsatz 13 insbesondere zum Schlagen von Sahne bzw. Eiweiß. Die stabförmigen Mischelemente 16' unterstützen hierbei den Schlagvorgang, wobei die Sahne in der Bahn gehalten wird, so dass diese nicht gegen die Rührtopfwandung 18 oder darüber hinaus in Richtung nach vertikal oben gegen den Deckel 12 spritzt.

In der aufgeklappten Stellung der Schaufelelemente 20, also in der horizontal ausgerichteten Stellung derselben dient der Mischeinsatz 13 bevorzugt zum Aufschäumen von Milch. Die Schaufelelemente 20 bieten hierbei eine relativ kleine Beaufschlagungsfläche, so dass die Blasen der durch die stabförmigen Mischelemente 16' aufgeschäumten Milch nicht zerstört werden. Weiter ist einem Verdrängen der Milch über eine zu große Beaufschlagungsfläche der Schaufelelemente 20 nach radial außen entgegengewirkt.

Die Umstellung der Schaufelelemente 20 bzw. der Mischelemente 16' kann durch den Benutzer erfolgen, dies weiter unter Nutzung von gegebenenfalls vorgesehenen Rastpositionen der Schaufelelemente 20. Bevorzugt und dargestellt ist eine drehrichtungsabhängige Umstellung der Schaufelelemente 20, dies zufolge einer Zusammenwirkung mit der in dem Rührtopf befindlichen Masse M.

Zum Schlagen von Sahne oder Eiweiß wird der Mischeinsatz 13 in Drehrichtung a gemäß Figur 3 betrieben, wobei die sich in dem Rührtopf 5 befindliche Masse M (Sahne oder Eiweiß) die Schaufelelemente 20 in die Vertikalausrichtung drängt und dort hält, wobei weiter die Schaufelelemente 20 sich rückwärtig gegen die bis zu den Tragarmen 17 durchgeführten stabförmigen Mischelemente 16' abstützen.

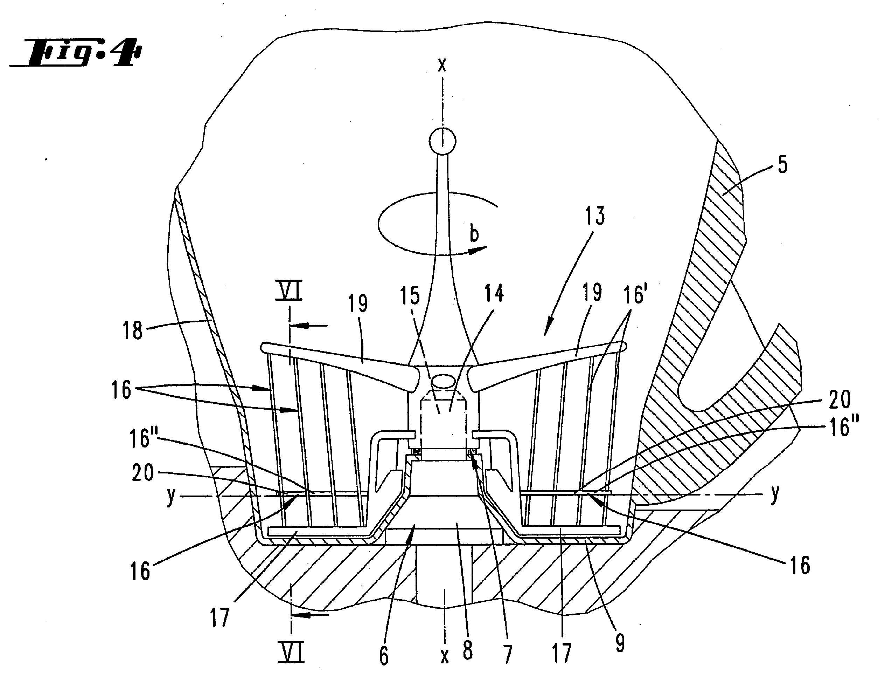

Zum Aufschäumen von Milch oder dergleichen wird der Mischeinsatz in entgegengesetzter Drehrichtung b betrieben (vgl. Figuren 4 und 6). Zufolge Einwirkung der aufzuschäumenden Masse M auf die der Schlagseite gegenüberliegende Seite der Schaufelelemente 20 werden diese selbsttätig um ihre Scharnierachsen y in die Horizontalausrichtung oder zumindest annähernd in eine horizontale Ausrichtung verschwenkt, womit einhergehend sich die Beaufschlagungsfläche wesentlich verkleinert.

Die aufzuschäumende Milch wird hierbei gleichermaßen verrührt, vermengt und aufgeschäumt, wobei weiter einem Anbrennen der Milch an dem beheizten Topfboden 9 entgegengewirkt ist.

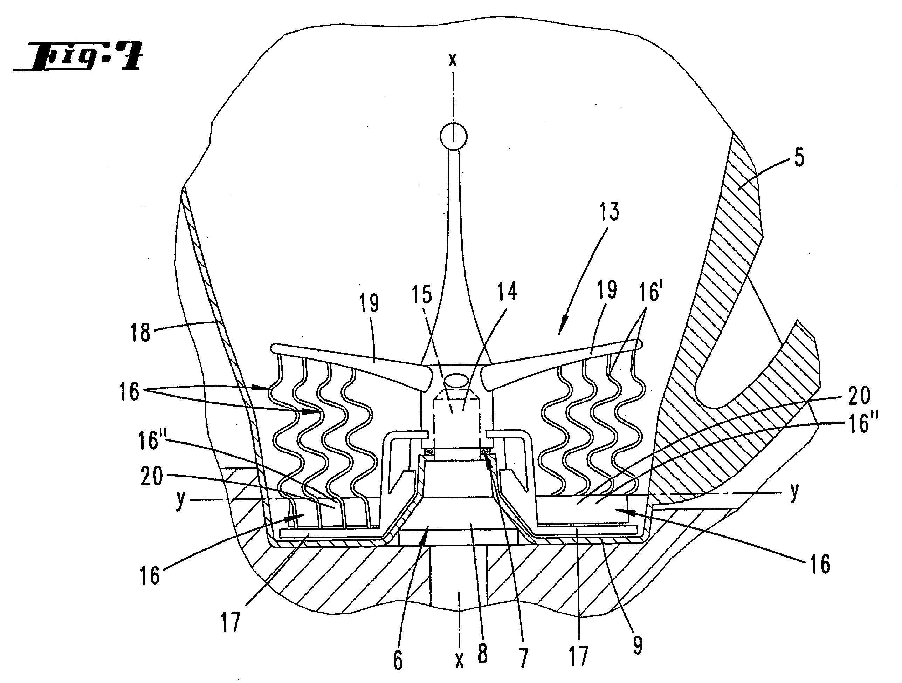

Alternativ zu den langgestreckt, geradlinig verlaufenden Mischelementen 16' können diese auch gemäß der Ausführungsform in Figur 7 in Erstreckungsrichtung betrachtet wellenförmig gestaltet sein. Weiter alternativ kann auch anstelle der einzelnen, stabförmigen Mischelemente 16' ein feines Drahtgitter oder dergleichen vorgesehen sein, dies mit einer bevorzugten Maschenweite von 1mm bis 4mm.

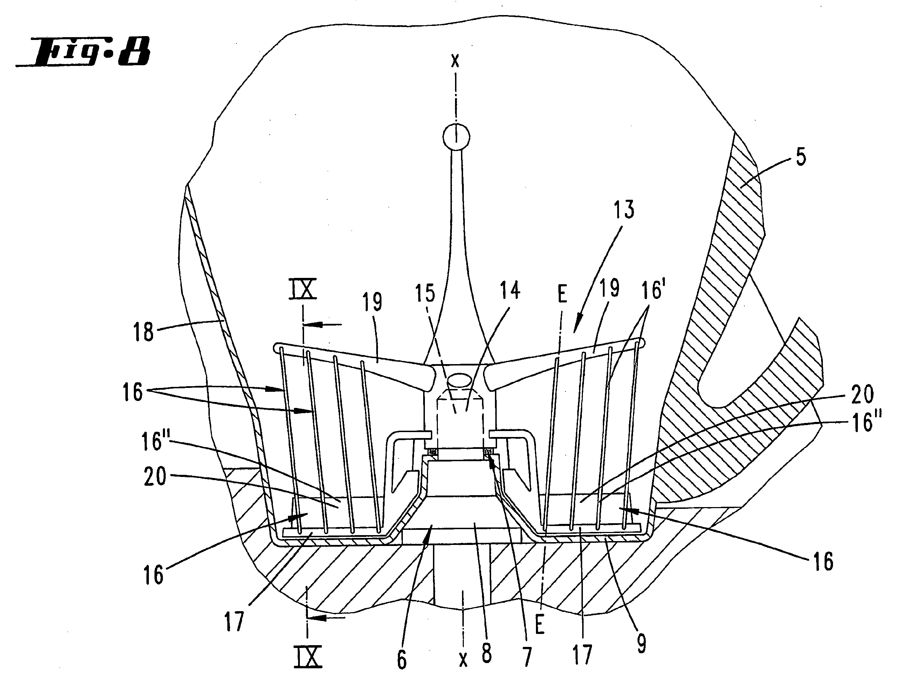

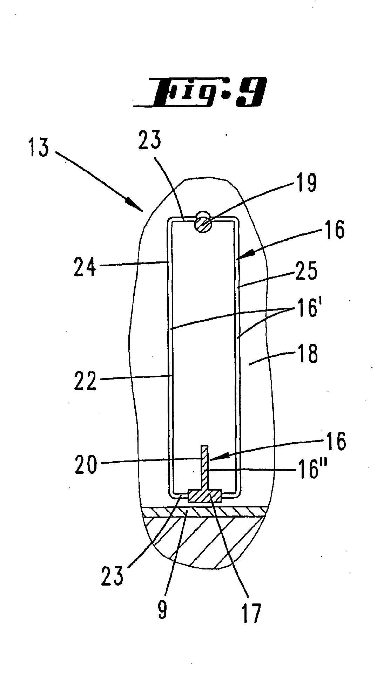

In einer weiteren Ausführungsform gemäß den Darstellungen in den Figuren 8 und 9 sind stabförmige Mischelemente 16' zusätzlich zu der in Radialrichtung betrachteten Nebeneinanderanordnung in Drehrichtung betrachtet auch hintereinander angeordnet, so weiter mit Bezug auf eine Seitenansicht gemäß Figur 8 deckungsgleich hintereinander. Dies ist in dem dargestellten Ausführungsbeispiel erreicht durch eine bügelartige Ausbildung der Mischelemente 16', deren Bügelebene E im Querschnitt in einem stumpfen Winkel zu der vertikal ausgerichteten Schaufelelementebene steht, weiter in dem dargestellten Ausführungsbeispiel etwa in einem Winkel von 80°, wobei die Bügelebene E ausgehend von den die Bügel tragenden Tragarmen 17 nach außen in Richtung auf die Rührtopfwandung 18 geneigt ist.

Die Mischelemente-Bügel 22 sind beispielsweise aus einem gebogenen, kunststoffummantelten Draht oder alternativ aus einem drahtförmigen Kunststoffspritzteil gebildet, dies mit einem langgestreckt rechteckigen Grundriss (vgl. Figur 9). Die die annähernd vertikal ausgerichteten, stabförmigen Mischelemente 16' verbindenden Querabschnitte 23 weisen hierbei eine Länge auf, die etwa dem 0,25-Fachen der Erstreckungslänge eines Mischelementes 16' entspricht. Die Festlegung der Mischelemente-Bügel 22 ist erreicht im Bereich der Querabschnitte 23, die den jeweiligen Tragarm 17 bzw. den jeweiligen Halterungsarm 19 durchsetzen oder an diesen angeformt sind.

In dem Ausführungsbeispiel gemäß den Figuren 8 und 9 ist das fußseitig vorgesehene, radial verlaufende Mischelemente 16" als statisches Schaufelelement 20 gebildet, welches sich zwischen den in Drehrichtung hintereinander angeordneten Mischelementen 16' erstreckt und unmittelbar an den Tragarmen 17 und/oder an dem Steckhalterungsabschnitt 14 befestigt ist.

Weiter alternativ zu der in Drehrichtung betrachteten Hintereinanderanordnung von stabförmigen, gegebenenfalls wellenförmigen Mischelementen 16' ist auch eine versetzte Anordnung derselben auf Lücke möglich derart, dass mit Bezug auf eine Seitenansicht gemäß Figur 8 zwischen zwei Mischelementen 16' in einer in Drehrichtung betrachteten vorderen Mischelementeebene ein Mischelement 16' in der in Drehrichtung hinteren Mischelementeebene angeordnet ist.

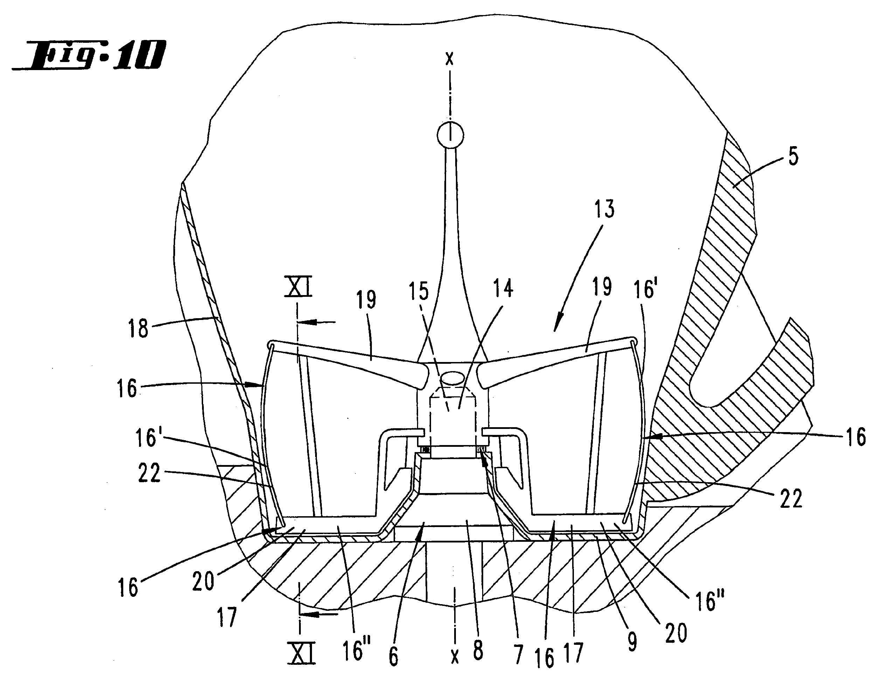

Die Figuren 10 bis 15 zeigen drei weitere Ausführungsbeispiele eines Mischeinsatzes 13, bei welchem jeweils zwischen den freien Enden der Tragarme 17 und der Halterungsarme 19 ein stabförmiges Mischelement 16' gespannt ist, welches weiter mit Bezug auf die Rührwerksachse x konvexartig nach radial außen in Richtung auf die Rührtopfwandung 18 auslädt, dies unter Beibehaltung eines radialen Abstandes zur Rührtopfwandung 18. Diese drahtförmigen Mischelemente 16' schlagen insbesondere die durch die Zirkulation im Rührtopf 5 an die Rührtopfwandung 18 gedrängte, geschlagene Sahne oder Eiweiß wieder in den schlagenden Kreislauf zurück. Auch wird die durch die zentrale Anordnung an die Rührtopfwandung 18 gedrängte, aufzuschäumende Milch weiter durch die Mischelemente 16' aufgeschäumt.

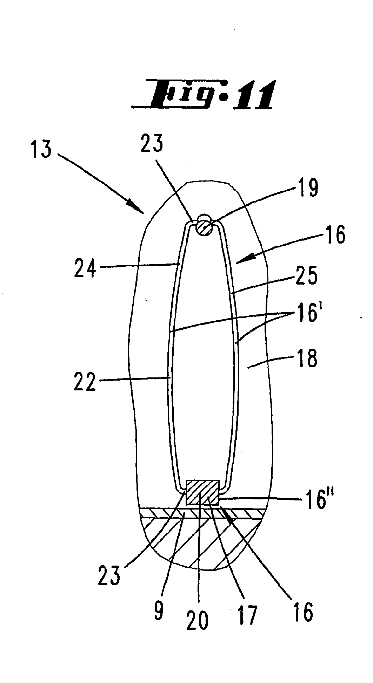

Das drahtförmige Mischelement 16' ist gemäß der Darstellung in Figur 11 als geschlossener Bügel gestaltet, formt entsprechend einen Mischelemente-Bügel 22 aus, wobei die hierdurch jeweils gebildeten zwei Mischelemente 16' eines Bügels 22 in einem gemeinsamen Drehkreis angeordnet sind.

Zwischen den Mischelementen 16' eines Bügels 22 erstreckt sich auch in dieser Ausführungsform das an dem Halterungsarm 19 festgelegte Schaufelelement 20 bzw. Mischelement 16".

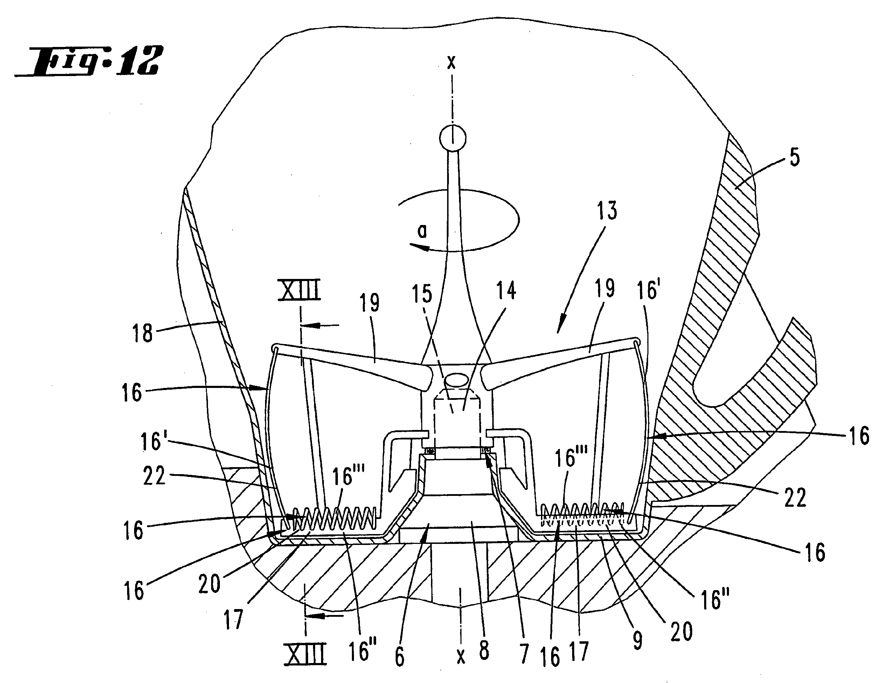

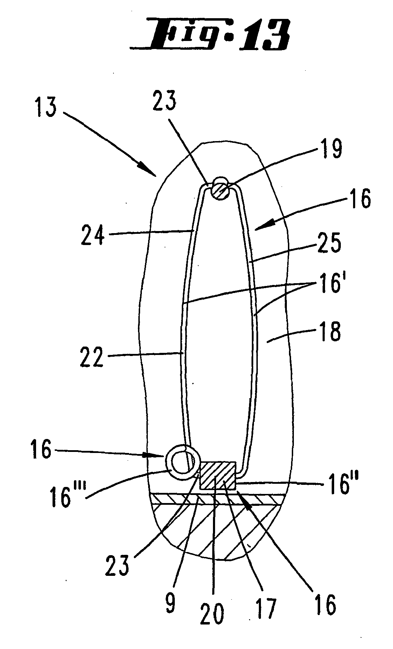

In den Figuren 12 und 13 ist eine Weiterbildung der Ausführungsform gemäß den Figuren 10 und 11 dargestellt. Deren Mischelemente 16' sind gleichgestaltet der zuvor beschriebenen Ausführung. Zusätzlich sind den fest angeordneten Schaufelelementen 20 in einer Drehrichtung vorgelagert, horizontal und radial ausgerichtete, federgangartige Mischelemente 16'" zugeordnet. Diese sind jeweils in Art einer Zylinderfeder ausgebildet und an der, der Beaufschlagungsfläche des jeweiligen Schaufelelementes 20 gegenüberliegenden Fläche an dem Schaufelelement 20 befestigt derart, dass diese zumindest in teilweiser Überdeckung zu dem jeweiligen Schaufelelement 20 liegen.

Über die federgangartigen Mischelemente 16'" ist eine günstige Durchmischung von Milch mit Luft erreichbar, so dass diese aufgeschäumt wird.

Der Mischeinsatz 13 der Ausführungsform gemäß den Figuren 12 und 13 wirkt drehrichtungsabhängig. So wird bei einer vorgegebenen Drehrichtung a über die in der Drehrichtung zunächst das Fluid beaufschlagenden Schaufelelemente 20 Sahne oder Eiweiß geschlagen. Die in Drehrichtung nachgeordneten Mischelemente 16"' kommen hierbei weniger zur Wirkung. Zum Aufschäumen von Milch wird die entgegengesetzte Drehrichtung eingeschlagen, so dass hierbei zunächst die federgangartigen Mischelemente 16'" bedingt durch die Feinstrukturierung Luft unter die aufzuschäumende Milch mischt.

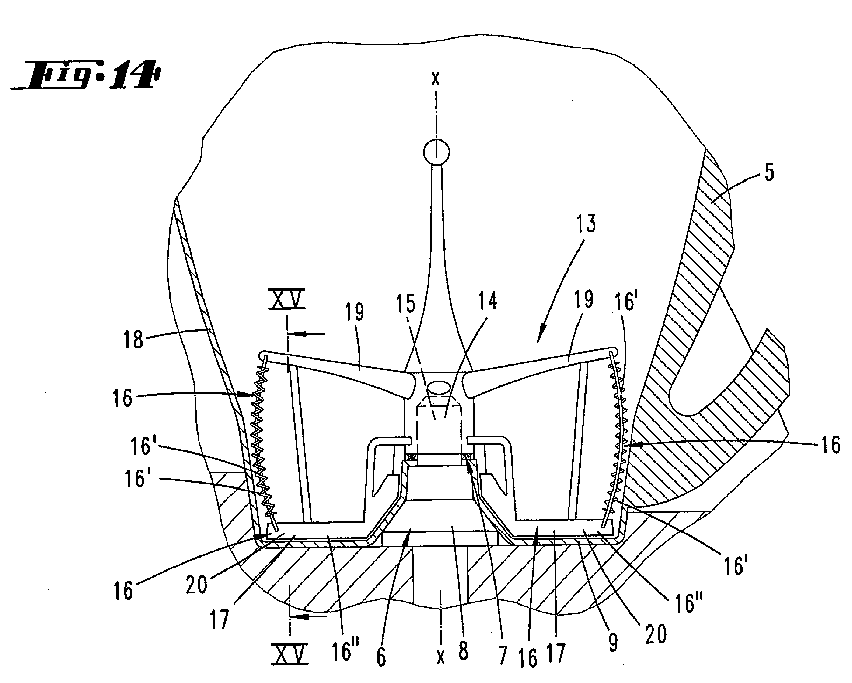

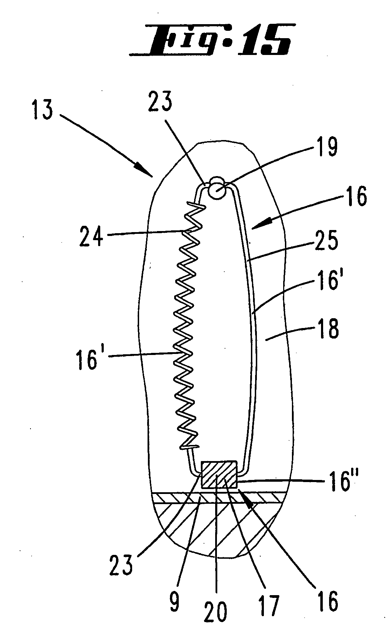

Auch die Ausführungsformen gemäß den Figuren 14 und 15 basiert auf der beschriebenen Ausführungsform gemäß den Figuren 10 und 11, wobei hier die in Drehrichtung vorderen Bügelabschnitte 24 unterschiedlich gestaltet zu den in Drehrichtung hinteren Bügelabschnitten 25. So bilden die vorderen Bügelabschnitte 24 stabförmige Mischelemente 16", während die hinteren Bügelabschnitte 25 wellenförmige Mischelemente 16" in Art schraubengangförmiger Drähte ausformen.

Auch diese Ausführungsform des Mischeinsatzes 13 wirkt drehrichtungsabhängig, wobei zum Schlagen von Sahne oder Eiweiß in Drehrichtung zunächst das stabförmige, bzw. drahtförmige Mischelement 16" auf das Fluid einwirkt, welchem das wellenförmige Mischelement 16" folgt. Zum Aufschäumen von Milch wird die Drehrichtung geändert, so dass über die wellenförmigen Mischelemente 16" Luft in die aufzuschäumende Milch eingemischt wird.

Die Ausführungsform gemäß den Figuren 14 und 15 ist weiter beispielsweise kombinierbar mit der Ausführungsform gemäß den Figuren 12 und 13.

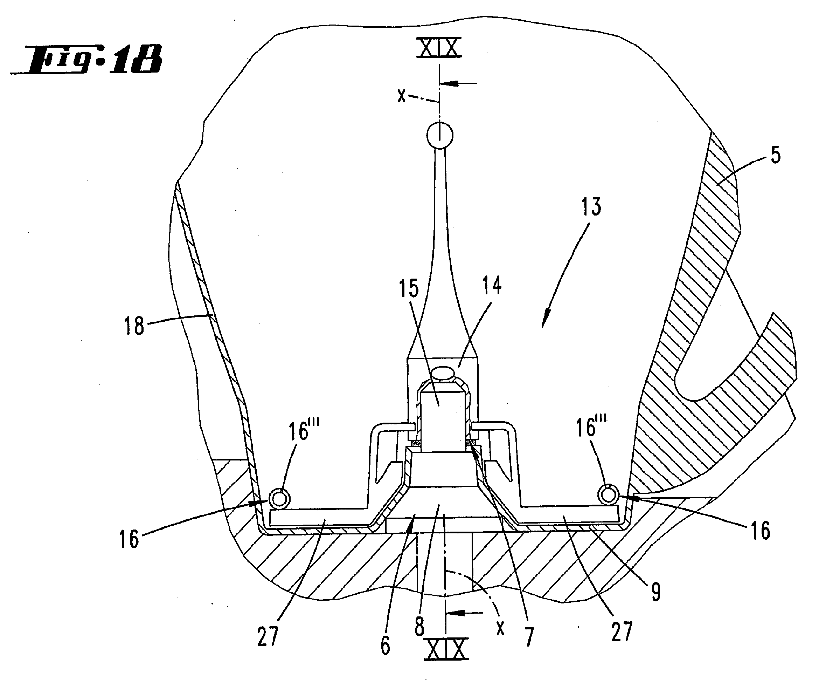

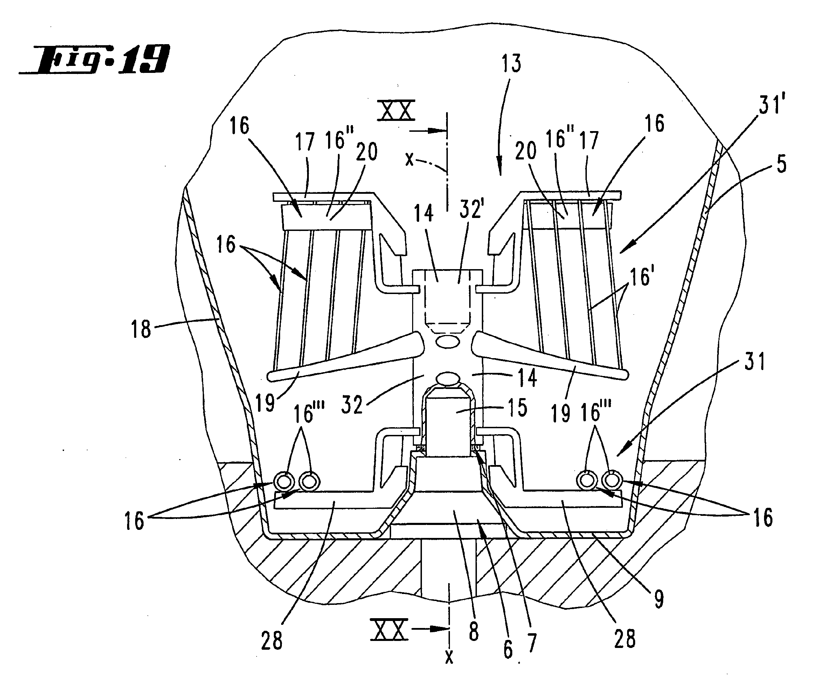

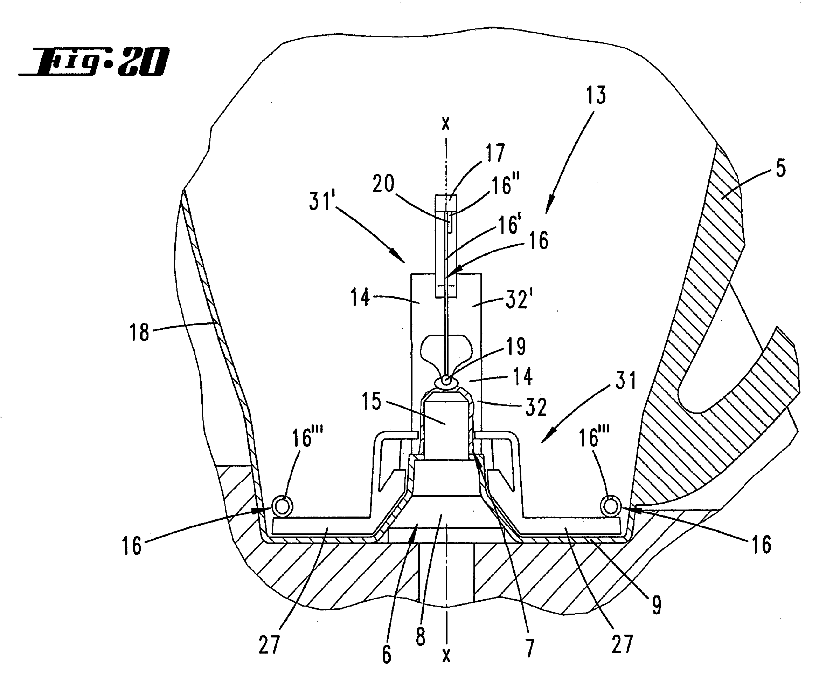

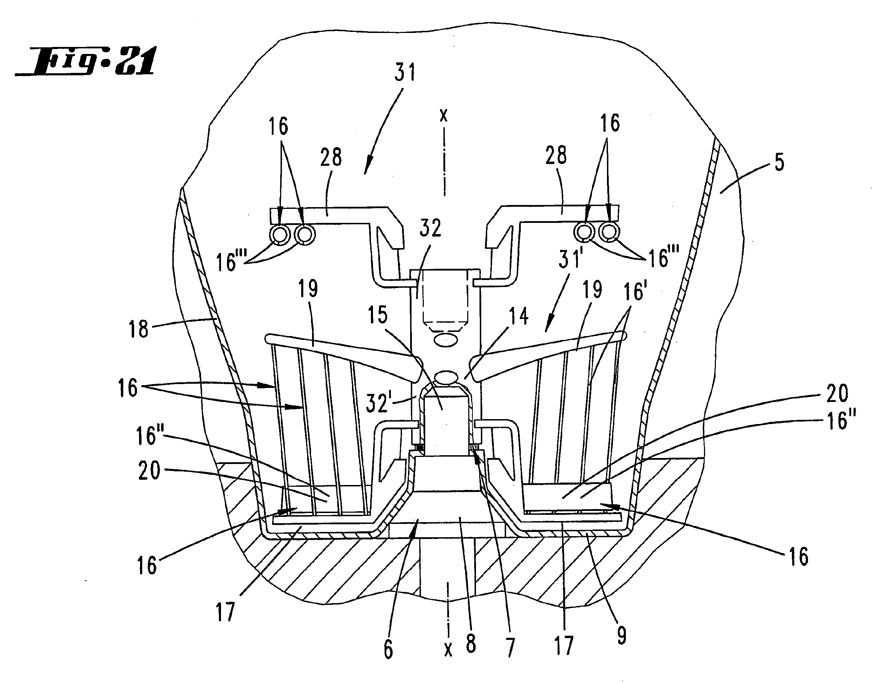

Eine weitere günstige Ausgestaltung eines Mischeinsatzes 13 sowohl zum Schlagen von Sahne bzw. Eiweiß als auch zum Aufschäumen von Milch zeigen die Figuren 19 bis 21. Hierbei handelt es sich um eine Kombination der Mischeinsätze 13 der in den Figuren 8 und 9 sowie in den Figuren 18 bis 20 dargestellten Ausführungsformen, die konzentrisch zur Rührwerksachse x in Übereinanderanordnung vorgesehen sind, wobei ein Mischeinsatzteil gegenüber dem anderen Mischeinsatzteil in Überkopfstellung angeordnet ist.

Jedes Mischeinsatzteil 31, 31' weist einen Aufsteckabschnitt 32, 32' auf, jeweils ausformend einen Steckhalterungsabschnitt 14. Diese sind in einer Projektion auf den Topfboden 9 betrachtet deckungsgleich zueinander ausgerichtet und mit Bezug auf eine horizontale Spiegelebene symmetrisch angeordnet.

Durch einfaches Umdrehen des so gestalteten Mischeinsatzes 13 und entsprechendem Umstecken des Aufsteckbereiches 32 bzw. 32' ist das jeweils für die Fluidbearbeitung günstige Mischeinsatzteil 31 bzw. 31' dem Rührtopfboden 9 zuordbar, so zum Aufschäumen von Milch das Mischeinsatzteil 31 und zum Schlagen von Sahne oder Eiweiß das Mischeinsatzteil 31'.

Hierbei sind die Halterungsarme 19 des Mischeinsatzteiles 31' so vertikal zu den Mischelementen 16"' des gegenüberliegenden Mischeinsatzteiles 31 beabstandet, dass diese beim Aufschäumen von Milch in der in Figur 25 dargestellten Zuordnungsstellung des Mischeinsatzes 13 mit Abstand oberhalb des Milchspiegels in dem Rührtopf 5 rotieren und somit die Blasenbildung im Milchschaum nicht beeinträchtigen.

### Bezugszeichenliste

- 1: Küchengerät
- 2: Gehäuse
- 3: Bedienfeld
- 4: Drehzahlsteller
- 5: Rührtopf
- 6: Rührwerk
- 7: Messersatz
- 8: Antriebswelle
- 9: Topfboden
- 10: Messer
- 11: Messer
- 12: Deckel
- 13: Mischeinsatz
- 14: Steckhalterungsabschnitt
- 15: Antriebswellenabschnitt
- 16: Mischelemente
- 16': Mischelemente
- 16'': Mischelemente
- 16''': Mischelemente
- 16'''': Mischelemente
- 17: Tragarme
- 18: Rührtopfwandung
- 19: Halterungsarme
- 20: Schaufelelemente
- 21: Scharnier
- 22: Mischelemente-Bügel
- 23: Querabschnitte
- 24: Bügelabschnitt
- 25: Bügelabschnitt
- 26: Stabilisierungsdraht
- 27: Mischarme
- 28: Mischarme
- 29: Fuß
- 30: Bohrung
- 31: Mischeinsatzteil
- 31': Mischeinsatzteil
- 32: Aufsteckbereich
- 32': Aufsteckbereich

- E: Bügelebene
- M: Masse

- x: Rührwerkachse
- y: Scharnierachse

## Patentansprüche

1. Mischeinsatz (13) für einen Rührtopf (5) eines elektromotorisch betriebenen Küchengeräts (1), insbesondere zur Steckhalterung, vorzugsweise zur Steckhalterung auf einem angetriebenen Messersatz (7) des Rührtopfes (5), mit sich radial und axial erstreckenden Mischelementen (16), wobei sich vertikal erstreckende Mischelemente (16) ausgebildet sind, **dadurch gekennzeichnet, dass** sich von einem in Radialrichtung verlaufenden Schaufelelement jeweils nach vertikal oben drahtförmige Mischelemente (16) erstrecken, wobei die Mischelemente (16) in Tragarmen (17) wurzeln und zwischen den fußseitigen Tragarmen (17) und den im Wesentlichen in einem spitzen Winkel zu einer Horizontalebene verlaufenden Halterungsarmen (19) gespannt sind.

2. Mischeinsatz (13) nach Anspruch 1, **gekennzeichnet durch** eine änderbar wirksame Beaufschlagungsfläche des Mischelements (16).

3. Mischeinsatz nach Anspruch 1 oder 2, **dadurch gekennzeichnet, dass** ein Mischelement (16) oder ein Teil eines Mischelements (16) klappbeweglich angeordnet ist.

4. Mischeinsatz nach einem der Ansprüche 2 oder 3, **dadurch gekennzeichnet, dass** sich die Änderung der Beaufschlagungsfläche zufolge einer Zusammenwirkung mit einer in dem Rührtopf (5) befindlichen Masse (M) selbsttätig drehrichtungsabhängig einstellt.

5. Mischeinsatz nach einem der Ansprüche 2 bis 4, **dadurch gekennzeichnet, dass** das änderbare Mischelement (16) um eine sich radial erstreckende Achse (y) beweglich ist oder um eine sich axial erstreckende Achse beweglich ist.

6. Mischeinsatz nach einem der vorhergehenden Ansprüche, **dadurch gekennzeichnet, dass** die Mischelemente (16) parallel verlaufen und/oder dass bezüglich einer Rotationsachse (x) gegenüberliegende Mischelemente (16) nach oben divergieren und/ oder dass die Mischelemente (16) bezogen auf eine Mischelemente-Vertikalachse wellenförmig verlaufen.

7. Mischeinsatz nach einem der vorhergehenden Ansprüche, **dadurch gekennzeichnet, dass** ein Mischelement (16) federgangartig geformt ist.

8. Mischeinsatz nach einem der vorhergehenden Ansprüche, **dadurch gekennzeichnet, dass** ein Mischelement (16) bügelartig gebildet ist, mit einer Bügelebene (E), die im Querschnitt in einem Winkel zu einer Schaufelelementebene steht.

9. Mischeinsatz nach Anspruch 8, **dadurch gekennzeichnet**, der Bügel (22) umlaufend geschlossen ist.

10. Mischeinsatz nach einem der Ansprüche 8 oder 9, **dadurch gekennzeichnet, dass** die in Drehrichtung (a, b) vorderen Bügelabschnitte (24) unterschiedlich gestaltet sind zu den in Drehrichtung hinteren.

11. Mischeinsatz nach einem der Ansprüche 8 bis 10, **dadurch gekennzeichnet, dass** ein Bügelabschnitt (24, 25) stabförmig gebildet ist, während der andere Bügelabschnitt (24, 25) wellenförmig gebildet ist.

12. Mischeinsatz nach einem der vorhergehenden Ansprüche, **dadurch gekennzeichnet, dass** ein radial äußeres, vertikal verlaufendes Mischelement (16) betrachtet von radial innen konkav gekrümmt verläuft.

13. Mischeinsatz nach einem der vorhergehenden Ansprüche, **dadurch gekennzeichnet, dass** der Mischeinsatz (13) axial gegenüberliegend zwei Aufsteckbereiche (32,32') aufweist.

14. Mischeinsatz nach Anspruch 13, **dadurch gekennzeichnet, dass** zufolge der zwei Aufsteckbereiche (32, 32') rührtopfbodenseitig je nach Steckrichtung unterschiedliche Mischelemente (16) angeordnet sind.

15. Mischeinsatz nach Anspruch 13 oder 14, **dadurch gekennzeichnet, dass** der Mischeinsatz (13) in übereinanderliegenden Bereichen unterschiedlich orientierte Mischelemente (16) aufweist.

## Claims

1. Mixing insert (13) for a mixing bowl (5) of an electric-motor operated kitchen appliance (1), in particular for plug-like mounting, preferably for plug-like mounting on a driven set of blades (7) of the mixing bowl (5), comprising radial and/or axial mixing elements (16), vertical mixing elements (16) being formed, **characterised in that** wire-shaped mixing elements (16) each extend vertically upwards from a scoop element which extends in the radial direction, the mixing elements (16) being rooted in supporting arms (17) and being clamped between the base-side supporting arms (17) and the holder arms (19) which extend substantially at an acute angle to a horizontal plane.

2. Mixing insert (13) according to claim 1, **characterised by** a changeable active impact surface of the mixing element (16).

3. Mixing insert according to either claim 1 or claim 2, **characterised in that** one mixing element (16) or a part of one mixing element (16) is arranged so as to be movable in a hinged manner.

4. Mixing insert according to either claim 2 or claim 3, **characterised in that** the impact surface changes automatically depending on the direction of rotation as a result of an interaction with a mass (M) located in the mixing bowl (5).

5. Mixing insert according to any of claims 2 to 4, **characterised in that** the changeable mixing element (16) is movable about a radial axis (y) or about an axial axis.

6. Mixing insert according to any of the preceding claims, **characterised in that** the mixing elements (16) extend in parallel and/or **in that** mixing elements (16) that are opposite in relation to an axis of rotation (x) diverge upwards and/or **in that** the mixing elements (16) undulate in relation to a mixing-element vertical axis.

7. Mixing insert according to any of the preceding claims, **characterised in that** one mixing element (16) is in the shape of a spring.

8. Mixing insert according to any of the preceding claims, **characterised in that** one mixing element (16) is stirrup-like having a stirrup plane (E) which, when viewed in cross section, is located at an angle to a scoop-element plane.

9. Mixing insert according to claim 8, **characterised in that** the stirrup (22) is closed around the circumference.

10. Mixing insert according to either claim 8 or claim 9, **characterised in that** the leading stirrup portions (24) in the direction of rotation (a, b) are designed differently to the trailing portions in the direction of rotation.

11. Mixing insert according to any of claims 8 to 10, **characterised in that** one stirrup portion (24, 25) is rod-like whereas the other stirrup portion (24, 25) is undulated.

12. Mixing insert according to any of the preceding claims, **characterised in that**, when viewed from radially inside, one radially outer, vertical mixing element (16) extends in a concave manner.

13. Mixing insert according to any of the preceding claims, **characterised in that** the mixing insert (13) has two axially opposite mounting regions (32, 32').

14. Mixing insert according to claim 13, **characterised in that**, according to the two mounting regions (32, 32'), different mixing elements (16) are arranged on the mixing-bowl-base side depending on the plugging direction.

15. Mixing insert according to either claim 13 or claim 14, **characterised in that** the mixing insert (13) has differently oriented mixing elements (16) in superposed regions.

## Revendications

1. Insert de mélange (13) pour un bol mélangeur (5) d'un robot de cuisine (1) entraîné par un moteur électrique, en particulier pour fixation enfichable, de préférence pour fixation enfichable sur un jeu de couteaux (7) entrainé du bol mélangeur (5), avec des éléments mélangeurs (16) s'étendant radialement et axialement, dans lequel sont formés des éléments mélangeurs (16) s'étendant verticalement, **caractérisé en ce que** des éléments mélangeurs (16) sous forme de fils s'étendent chacun verticalement vers le haut à partir d'un élément formant pelle s'étendant en direction radiale, dans lequel les éléments mélangeurs (16) s'ancrent dans des bras support (17) et sont tendus entre les bras support (17) côté inférieur et les bras de maintien (19) qui s'étendent sensiblement avec un angle aigu par rapport à un plan horizontal.

2. Insert de mélange (13) selon la revendication 1, **caractérisé par** une surface d'impact efficace modifiable de l'élément mélangeur (16).

3. Insert de mélange selon la revendication 1 ou 2, **caractérisé en ce qu'**un élément mélangeur (16) ou une partie d'un élément mélangeur (16) est agencé de manière rabattable.

4. Insert de mélange selon la revendication 2 ou 3, **caractérisé en ce que** la modification de la surface d'impact se règle automatiquement en dépendance du sens de rotation en conséquence d'une coopération avec une masse (M) se trouvant dans le bol mélangeur (5).

5. Insert de mélange selon l'une des revendications 2 à 4, **caractérisé en ce que** l'élément mélangeur (16) modifiable est mobile autour d'un axe (y) s'étendant radialement ou autour d'an axe s'étendant axialement.

6. Insert de mélange selon l'une des revendications précédentes, **caractérisé en ce que** les éléments mélangeurs (16) s'étendent parallèlement et/ou des éléments mélangeurs (16) opposés par rapport à un axe de rotation (x), divergent vers le haut et/ou les éléments mélangeurs (16) s'étendent sous forme d'ondulations par rapport à un axe vertical de l'élément mélangeur.

7. Insert de mélange selon l'une des revendications précédentes, **caractérisé en ce qu'**un élément mélangeur (16) est en forme de ressort.

8. Insert de mélange selon l'une des revendications précédentes, **caractérisé en ce qu'**un élément mélangeur (16) est en forme de boucle, avec un plan de boucle (E) qui est disposé de profil suivant un angle par rapport à un plan d'élément formant pelle.

9. Insert de mélange selon la revendication 8, **caractérisé en ce que** la boucle est à contour fermé.

10. Insert de mélange selon l'une des revendications 8 ou 9, **caractérisé en ce que** les sections de boucle (24) vers l'avant par rapport à la direction de rotation (a, b) sont conformées différemment que celles vers l'arrière par rapport à la direction de rotation.

11. Insert de mélange selon l'une des revendications 8 à 10, **caractérisé en ce qu'**une section de boucle (24, 25) est sous forme de barre, tandis que l'autre section de boucle (24, 25) est sous forme d'ondulations.

12. Insert de mélange selon l'une des revendications précédentes, **caractérisé en ce qu'**un élément mélangeur (16) radialement extérieur s'étendant verticalement, s'étend courbé de manière concave en l'observant radialement de l'intérieur.

13. Insert de mélange selon l'une des revendications précédentes, **caractérisé en ce que** l'insert de mélange (13) présente deux zones d'emboitement (32, 32') se faisant face axialement.

14. Insert de mélange selon la revendication 13, **caractérisé en ce que** par suite des deux zones d'emboîtement (32, 32'), différents éléments mélangeurs (16) sont agencés sur le fond du bol de mélange selon la direction d'emboîtement.

15. Insert de mélange selon la revendication 13 ou 14, **caractérisé en ce que** l'insert de mélange (13) présente dans des zones superposées des éléments mélangeurs (16) orientés de façon différentes.
